# FASCICULE DE BREVET EUROPEEN

(11) **EP 1 712 900 B1**
(45) Date de publication et mention de la délivrance du brevet: **11.05.2016**
(21) Numéro de dépôt: 06112456.6
(22) Date de dépôt: 11.04.2006
(51) Int. Cl.: G01N 27/02, G01R 27/02

(54) **Dispositif d`analyse de la composition du contenu d`un recipient**
Vorrichtung zur Analyse der Zusammensetzung des Inhalts eines Behälters
Device to analyse the composition of the contents of a receptacle

(30) Priorité: 19.07.2005 FR 0507643; 15.04.2005 FR 0503774
(43) Date de publication de la demande: 18.10.2006
(73) Titulaire: Manneschi, M. Alessandro, 52100 Arezzo (IT)
(72) Inventeur: Manneschi, M. Alessandro, 52100 Arezzo (IT)
(74) Mandataire: Regimbeau

(56) Documents cités:
- DD-A1- 156 400
- FR-A- 2 815 718
- GB-A- 283 650
- US-A- 3 609 526
- US-A- 4 220 915
- US-A- 4 403 191
- US-A- 5 514 337
- US-A- 6 028 433
- US-A1- 2003 222 662
- US-A1- 2004 174 154
- US-B1- 6 511 851
- US-B1- 6 664 071

## Description

La présente invention concerne le domaine de l'analyse de la composition du contenu de récipients tels que des bouteilles.

La présente invention peut trouver de nombreuses applications. Elle peut s'appliquer notamment au contrôle de fabrication dans des usines d'embouteillage pour éviter toute malversation sur le contenu de récipients fournis ultérieurement au grand public. L'invention peut également s'appliquer au contrôle de bagages transportés par des passagers en particulier des bagages à main conservés par des passagers dans les aéroports.

Les moyens d'examen par rayons X, bien connus, ne permettent pas de déterminer le contenu de bouteilles ou récipients équivalents. De tels moyens d'examen permettent en effet seulement le classement en deux catégories, matériaux organiques et non organiques. Ils ne permettent pas de distinguer entre eux deux matériaux organiques.

Par ailleurs, les bouteilles en verre ou en matière plastique scellées ne permettent pas un échantillonnage de leur contenu et ne permettent donc pas d'analyser ce dernier sauf à opérer une ouverture forcée.

Le document DD156400 divulgue un dispositif d'analyse, dans lequel un récipient, le contenu duquel est à analyser, peut être placé. Les moyens de support du récipient sont au moins partiellement définis par les armatures capacitives du dispositif.

Dans cette situation, un besoin important est ressenti de disposer de moyens d'investigation non destructifs pour déterminer la composition du contenu de récipients.

Ce but est atteint dans le cadre de la présente invention grâce à un dispositif d'analyse de la composition du contenu d'un récipient tel que défini en revendication 1 annexée.

Dans le cadre de la présente invention, on entend par « au moins plusieurs fréquences » un nombre de fréquences supérieur à 1.

Selon une autre caractéristique avantageuse de la présente invention, les moyens aptes à fournir une information liée à l'impédance complexe mesurée et en conséquence à la nature du contenu dudit récipient, comprennent des moyens aptes à comparer l'impédance complexe mesurée avec des valeurs de référence prédéterminées pour la même plage de fréquences et à générer une alarme, lorsque l'impédance complexe mesurée s'écarte des valeurs de référence.

Selon une autre caractéristique avantageuse de la présente invention, les moyens aptes à fournir une information liée à l'impédance complexe mesurée comprennent des moyens aptes à indiquer la nature ainsi détectée du contenu du récipient ou au moins la famille de ce contenu.

D'autres caractéristiques, buts et avantages de la présente invention apparaîtront à la lecture de la description détaillée qui va suivre, et en regard des dessins annexés, donnés à titre d'exemples non limitatifs et sur lesquels :
- la figure 1 représente une vue schématique en perspective d'un dispositif d'analyse conforme à un premier mode de réalisation de la présente invention,
- la figure 2 représente une vue schématique sous forme de blocs fonctionnels des éléments essentiels composant ce dispositif,
- la figure 3 représente la partie réelle et la partie imaginaire de l'impédance complexe mesurée dans le cas d'une charge composée d'eau, sur une large plage de fréquences,
- la figure 4 représente un mode de réalisation de capteurs électromagnétiques émetteurs/récepteurs conformes à la présente invention, et
- les figures 5a et 5b, représentent un mode de réalisation non conforme à l'invention présenté pour expliquer l'analyse de récipients de volumes variables.

La présente invention repose essentiellement sur l'approche suivante.

Les matériaux diélectriques présentent quatre polarisations de base : électronique, ionique, de dipôle et migrationnelle.

Chaque type de polarisation est caractérisé par un temps de mise en place, appelé temps de montée. Si le champ électromagnétique d'excitation a une pulsation supérieure à l'inverse du temps de montée, la polarisation ne peut pas se réaliser. Par conséquent, la polarisation est présente uniquement aux fréquences inférieures à celles de coupure et est absente aux fréquences supérieures. Dans la zone de transition, on assiste à un phénomène de perte d'énergie dans le diélectrique dû à la rotation des molécules déphasées vis à vis du champ d'excitation.

Les temps de montée pour la polarisation électronique sont de 10⁻¹⁴ à 10⁻¹⁵ s, c'est-à-dire dans le domaine optique. Une telle gamme de fréquences est difficilement exploitable à l'échelle industrielle car les bouteilles à examiner peuvent être fréquemment partiellement ou complètement opaques.

La polarisation ionique a des temps de montée compris entre 10⁻¹³ et 10⁻¹⁴ s, très proche des temps de relaxation électronique. Elle est donc également difficilement exploitable.

La polarisation de dipôle est caractéristique des diélectriques polaires (comme par exemple l'eau).

La polarisation de dipôle, au contraire des polarisations électroniques et ioniques, qui sont sans inertie, persiste pour un certain temps après l'extinction d'une excitation. La polarisation de dipôle diminue avec une loi exponentielle et une constante de temps, appelée temps de relaxation, comprise entre 10⁻⁶ et 10⁻¹¹ s, c'est-à-dire dans le domaine des fréquences radio. Les ondes électromagnétiques ayant ces fréquences peuvent traverser le verre, la matière plastique et d'autres matériaux diélectriques. La Demanderesse a ainsi déterminé que les ondes électromagnétiques peuvent être utilisées pour l'examen du contenu de bouteilles ou récipients équivalents.

La polarisation migrationnelle est présente dans certains diélectriques, en particulier dans les matériaux hétérogènes, qui contiennent des impuretés. Dans ce cas, les charges se déplacent très lentement et le temps de montée peut être de plusieurs secondes, minutes, voire parfois heures. Ce type de polarisation par conséquent n'est mesurable qu'à très basse fréquence.

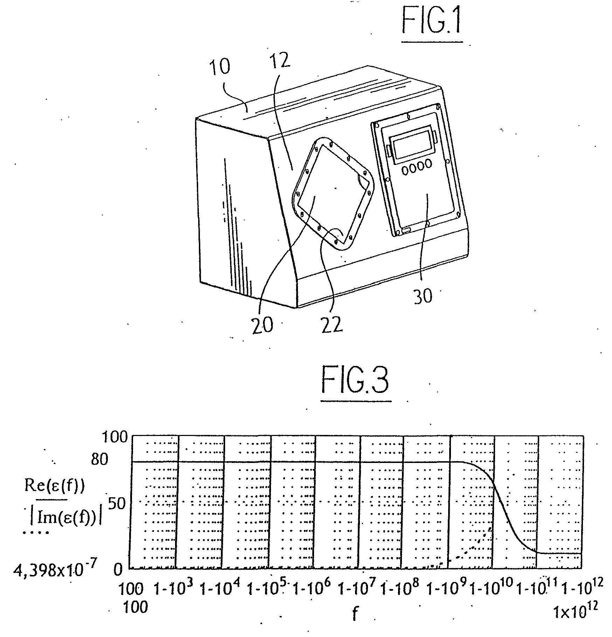

L'eau qui est un liquide polaire, et par conséquent les liquides à base d'eau, présentent un temps de relaxation de l'ordre de 10⁻¹¹ s à température ambiante, correspondant à une fréquence d'environ 16 GHz. La mesure de la constante diélectrique complexe à fréquence plus basse que celle de relaxation montre une partie réelle élevée et des pertes limitées (eau distillée) comme l'illustre la figure 3 annexée.

Les hydrocarbures saturés CnH(2n+2) sont des molécules non polaires ou avec un moment de dipôle électrique très bas, par conséquent, ils ne présentent pas un phénomène de polarisation de dipôle et la valeur de la partie réelle de la constante diélectrique est basse (constante diélectrique relative de l'ordre de 2). Les pertes dans les hydrocarbures sont négligeables jusqu'à des fréquences très élevées. Si une molécule d'hydrocarbure perd sa symétrie comme, par exemple, dans le cas de l'alcool éthylique ou méthylique, on assiste à la parution d'un moment de dipôle électrique et, par conséquent, à une constante supérieure à celle obtenue dans le cas des hydrocarbures, et à un phénomène de résonance à la fréquence de relaxation dipolaire.

Les phénomènes physiques décrits ci-dessus sont connus depuis la fin des années 30 (voire par exemple Peter Debye Nobel Lecture, 1936).

Cependant, ils n'ont pas jusqu'ici été mis en oeuvre pour l'analyse efficace du contenu de récipients.

On a représenté sur la figure 1, le boîtier d'un dispositif d'analyse conforme à la présente invention.

La géométrie générale de ce boîtier peut faire l'objet de nombreuses variantes de réalisation et ne sera donc pas décrite dans le détail par la suite.

De préférence, ce boîtier comprend un carter 10 métallique pour former un blindage autour du capteur électromagnétique conforme à la présente invention vis à vis de l'environnement extérieur.

De préférence, ce carter définie une cavité 20 dont la partie inférieure 22 présente une concavité dirigée vers le haut, conçue pour recevoir un récipient à analyser et garantir un positionnement précis de ce dernier par rapport aux moyens émetteurs/récepteurs de champ électromagnétique conformes à l'invention.

Plus précisément encore, de préférence, dans le cadre de la présente invention, la cavité 20 précitée est formée d'un canal de section droite constante dont les génératrices sont inclinées vers le bas en éloignement de la face avant ouverte 12 par laquelle un récipient est introduit.

La face arrière de cette cavité ou canal 20 est de préférence fermée pour éviter que le récipient analysé ne glisse sur le fond 22.

La section droite du canal 20 peut faire l'objet de nombreuses variantes.

On a représenté sur la figure 1 annexée, une autre variante de réalisation selon laquelle le canal 20 possède une section droite carrée, voire rectangulaire, dont les diagonales sont respectivement verticale et horizontale de sorte qu'une arête coïncide avec le point le plus bas du canal 20.

Comme on le voit sur la figure 1 annexée, le boîtier 10 comporte en outre de préférence un pupitre de contrôle 30 équipé d'un clavier de saisie et/ou de programmation, d'un afficheur et de moyens de signalisation (lumineux et/ou sonore) de présence réseau et d'alarme. A cet égard, l'invention n'est bien entendu pas limitée aux modes de réalisation particuliers représentés sur les figures annexées.

De préférence, la cavité 20 est enrobée par un revêtement de protection plastique.

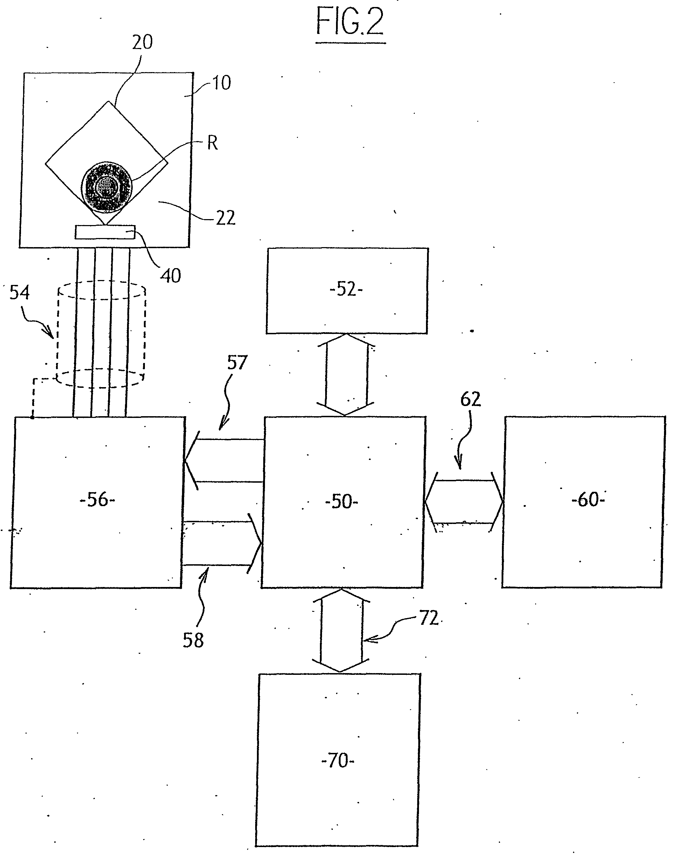

Comme on l'a illustré sur la figure 2 sur laquelle on a schématisé sous la référence R un récipient à analyser et sur laquelle on retrouve le fond 22 de la cavité 20, de préférence le capteur ou les capteurs électromagnétiques destiné(s) à mesurer les caractéristiques diélectriques complexes de la bouteille R et de son contenu sont placés autour de la cavité 20.

Ces moyens émetteurs/récepteurs de champ électromagnétique, sont formés de préférence d'un ou plusieurs transducteurs (antennes) 40 relié(s), par l'intermédiaire d'un réseau de connexion 54, d'un réseau électromagnétique de mesure 56 et de bus 57, 58, à un générateur 50, conçus pour émettre une onde électromagnétique. Typiquement le générateur 50 est adapté pour couvrir la plage de fréquences allant de quelques Hz, par exemple 5Hz à qqs GHz, par exemple 20 ou 50 GHz. Le générateur 50 est mis en oeuvre, soit manuellement par un opérateur lorsque celui-ci introduit un récipient R dans le canal 20, soit automatiquement sous l'effet d'un capteur 52 conçu pour détecter la présence d'un récipient R dans le canal 20.

Les moyens 50 sont conçus par ailleurs pour mesurer l'impédance complexe des moyens émetteurs 40 influencés par la charge constituée par le récipient R et son contenu, représentative des caractéristiques diélectriques complexes de ce récipient R et de son contenu. Plus précisément, les moyens 50 sont conçus pour mesurer cette impédance complexe à plusieurs fréquences échantillonnées sur la plage d'excitation précitée de quelques Hz à plusieurs GHz. Typiquement, les moyens 50 opèrent ainsi sur un nombre de fréquences compris entre 10 et 50, avantageusement sur une trentaine de fréquences.

Par ailleurs, les moyens 50 sont adaptés pour fournir une information liée à l'impédance complexe mesurée et à la nature du contenu du récipient détecté en conséquence.

De préférence, ces moyens 50 sont adaptés pour comparer l'impédance complexe ainsi mesurée avec des valeurs de référence prédéterminées pour la même plage de fréquences et à générer une alarme lorsque l'impédance complexe mesurée s'écarte des valeurs de référence.

On a représenté sur la figure 2, une mémoire 60 couplée aux moyens d'analyse 50 par un bus de communication 62, et dans laquelle peuvent être mémorisées les valeurs de référence prédéterminées sur la plage de fréquence de travail. On a par ailleurs représenté sur la même figure 2 sous la référence 70, des moyens d'alarme, présents de préférence sur le pupitre de contrôle 30, reliés aux moyens 50 par un bus de communication 72 et adaptés pour générer une alarme sonore et/ou visuelle, lorsque l'impédance complexe mesurée s'écarte des valeurs de référence.

En variante, les valeurs de référence peuvent être calculées par les moyens 50 et non pas contenues dans une mémoire 60.

Par ailleurs, selon une autre variante, les moyens 70 peuvent être adaptés pour indiquer directement la nature du contenu du récipient R ou au moins la famille de ce contenu à la place de ou en complément des moyens d'alarme précités.

Les moyens 40 émetteurs/récepteurs de champ électromagnétique peuvent faire l'objet de nombreux modes de réalisation.

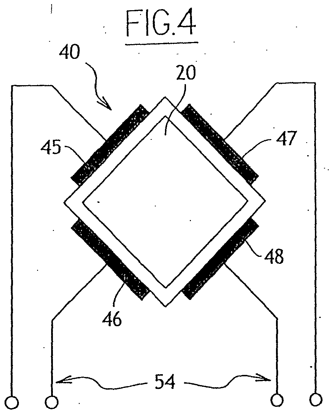

La figure 4 illustre des moyens 40 qui comprennent deux capacités composées de quatre armatures 45, 46, 47, 48, reliées par un réseau 54 à quatre fils aux moyens 56 et formant respectivement, et le cas échéant alternativement, émetteur et récepteur.

Par ailleurs, dans le cadre de la présente invention, on peut utiliser des capteurs mettant en oeuvre simultanément un transducteur inductif et un transducteur capacitif. Cette disposition permet de déceler que la croissance de la partie réelle de la constante diélectrique complexe est due à une armature métallique interne au récipient et non à un ou des liquides ayant des propriétés particulières. Cette disposition permet ainsi de déceler la présence d'écrans métalliques susceptibles de former blindage perturbant la mesure. Le capteur inductif alimenté par une source de courant alternatif produira, dans ce cas, des courants de Foucault dans la partie métallique. Ces courants seront mesurés par le dispositif de traitement. Et la comparaison des signaux provenant du transducteur de champ électrique et du transducteur de champ magnétique permet une détection satisfaisante.

Bien entendu, le nombre de moyens composant les émetteurs et/ou récepteurs n'est aucunement limité et peut être supérieur à ceux illustrés sur les figures annexées.

L'homme de l'art comprendra à la lecture de la description détaillée qui précède, que la présente invention propose ainsi un capteur électromagnétique à balayage de fréquences élevées qui permet de mesurer les caractéristiques diélectriques de la bouteille R et de son contenu.

Une fois que l'objet R à analyser est positionné dans la cavité 20, le générateur 50 est activé, soit manuellement, soit automatiquement, et l'impédance complexe du réseau formé par le circuit d'émission/réception 40 influencée par le récipient R et son contenu est mesurée.

L'impédance mesurée dépend du circuit de transmission/réception et de la charge, représentée par la bouteille examinée. Cette impédance complexe est composée par une partie réelle, liée aux pertes (conductibilité) dans l'objet R analysé et d'une partie imaginaire, liée aux caractéristiques diélectriques.

La mesure de l'impédance est effectuée à différentes fréquences dans la plage déterminée.

Tous les liquides comestibles à base d'eau, comme des boissons sans alcool, le vin et les liqueurs sont bien identifiables par leurs caractéristiques diélectriques polaires, avec une constante diélectrique élevée et des pertes situées entre un minimum et une valeur prédéterminée. Une valeur différente de celle typique des liquides comestibles sera par conséquent détectée et provoquera une alarme acoustique et/ou visuelle, plus le cas échéant des messages éventuels sur l'afficheur, ou encore, selon la variante retenue, directement l'indication de la nature du contenu détecté.

Comme décrit précédemment, la section droite du canal 20 peut faire l'objet de nombreuses variantes.

Pour certaines géométries de la section droite du canal, l'impédance complexe mesurée peut varier en fonction du volume du récipient dans lequel un même liquide analysé est contenu.

Ainsi, dans le cas d'un canal dont la section droite serait de forme circulaire, l'impédance complexe mesurée Zmesuré pour un récipient R de 50 centilitres contenant de l'eau sera différente de l'impédance complexe mesurée Zmesuré pour un récipient R de 2 litres contenant de l'eau.

Ceci est dû au fait que l'impédance complexe mesurée Zmesuré correspond à l'impédance complexe équivalente Zéquivalent de l'ensemble des dipôles situés entre les armatures des moyens émetteurs/récepteurs de champ électromagnétique.

Lorsque l'on utilise le dispositif avec un récipient R de 50 centilitres disposé dans le canal de sorte que son axe longitudinal du récipient soit sensiblement horizontal, l'impédance complexe mesurée Zmesuré est égale à la somme de l'impédance complexe de l'eau contenue dans le récipient R et des impédances complexes de l'air situé entre les parois du récipient et les armatures.

Les impédances complexes de l'air situé entre les parois du récipient et les armatures sont considérées comme des impédances parasites qu'il convient de minimiser afin que l'impédance complexe mesurée soit sensiblement égale à l'impédance complexe du liquide contenu dans le récipient à analyser.

La géométrie carrée (ou rectangulaire) de la section droite présente l'avantage de rendre la mesure de l'impédance complexe indépendante du volume du récipient dans lequel le liquide à analyser est contenu.

En effet, cette géométrie permet de limiter la distance entre les parois du récipient R et les armatures 45, 46 des moyens émetteurs/récepteurs de champ électromagnétique quelque soit le volume du récipient R.

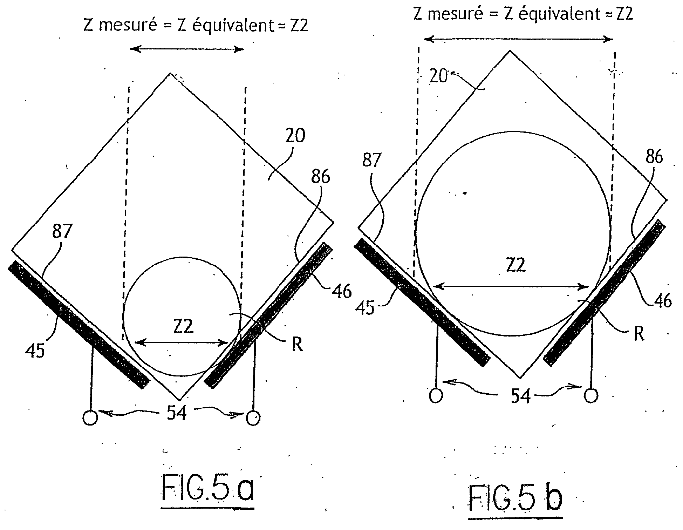

On a illustré aux figures 5a, 5b un dispositif comprenant un canal 20 de section droite de forme carrée conforme à l'invention, dont les diagonales sont respectivement verticale et horizontale de sorte qu'une arête coïncide avec le point le plus bas du canal 20 (mais non conforme à l'invention pour ce qui est de la configuration des armatures capacitives illustrées sur les figures 5a et 5b).

Dans le cas d'un récipient R de forme cylindrique placé dans le canal 20 de sorte que l'axe longitudinal du récipient R soit horizontal, le récipient R aura tendance à venir en contact avec les cloisons 86, 87 du canal 20 du fait de la gravité, comme illustré aux figures 5a et 5b.

Ainsi, la distance entre les parois du récipient et les armatures 45, 46 (qui sont très proche des cloisons 86, 87 du canal 20) est quasi nulle quelque soit le diamètre du récipient contenant le liquide à analyser, de sorte que les impédances parasites Z1 et Z3 de l'air situé entre les parois du récipient R et les armatures sont négligeables. L'impédance mesurée Zmesuré est sensiblement égale à l'impédance complexe du liquide contenu dans le récipient R quelque soit le volume du récipient R utilisé.

Ainsi, le canal 20 du dispositif définit préférentiellement une concavité 22 dirigée vers le haut. Encore plus préférentiellement, la convergence des cloisons 86, 87 du canal 20 est déterminée de sorte que non seulement la distance entre le point le plus bas du canal 20 et le centre de gravité du récipient R augmente en fonction du volume du récipient R mais de plus le point de contact du récipient R sur les parois du canal 20 s'élève et la hauteur de la base du récipient par rapport au point le plus bas du canal 20, augmente également en fonction du volume du récipient R. Plus préférentiellement encore, la concavité 22 dirigée vers le haut est obtenue grâce à deux tronçons rectilignes de manière à minimiser l'effet des impédances parasites Z1 et Z3 de l'air situé entre les parois du récipient R et les cloisons 86, 87 du canal 20.

Bien entendu la présente invention n'est pas limitée aux modes de réalisation particuliers qui viennent d'être décrits mais s'étend à toute variante conforme à son esprit.

On notera par ailleurs que, dans le cadre de la présente invention, les capteurs 40 sont de préférence adaptés pour couvrir au moins une partie substantielle des récipients, voire la totalité de ceux-ci. Ceci garantit un haut niveau de sécurité dans l'analyse, puisque ceci permet d'analyser l'intégralité du contenu des récipients et non pas seulement une partie de ceux-ci.

Lorsqu'il est prévu plusieurs transducteurs, toutes les combinaisons sont possibles, c'est-à-dire que ces transducteurs peuvent être simultanément ou successivement émetteur et/ou récepteur.

Selon une autre caractéristique avantageuse, le dispositif d'analyse conforme à la présente invention comprend en outre un ensemble détecteur de rayonnement ionisant ou radioactif. Cet ensemble est destiné à détecter la présence éventuelle de traces de produits radioactifs dans le récipient analysé.

L'ensemble détecteur de rayonnement ionisant ou radioactif peut faire l'objet de nombreux modes de réalisation. Il peut être formé de toutes structures connues de l'homme de l'art, en particulier toute structure apte à convertir un rayon ionisant détecté, en un signal électrique exploitable. Il peut s'agir par exemple et non limitativement d'un détecteur de type Geiger comprenant un tube ou chambre qui loge un gaz dont la composition est choisie pour générer une décharge ionisante lors de la détection d'un rayonnement actif, et de là une impulsion électrique. Il peut également s'agir d'un détecteur à scintillateur apte à convertir l'énergie détectée en scintillations lumineuses converties ensuite en signal électrique par un réseau de photomultiplicateurs. De nombreux scintillateurs ont été proposés à cet effet, par exemple à base de iodure de sodium, de iodure de césium ou encore de germanate de bismuth.

L'ensemble détecteur de rayonnement ionisant est placé en tout lieu approprié et de préférence à proximité immédiate des parois de la cavité 20, sur l'extérieur de celle-ci. Une localisation a priori optimale de cet ensemble, est sous la cavité 20, contre les deux parois composant le dièdre inférieur de la cavité 20.

L'ensemble détecteur de rayonnement ionisant 100, 110 est adapté pour travailler en temps masqué, en parallèle du dispositif de mesure d'impédance complexe précédemment décrit. L'ensemble détecteur de rayonnement ionisant 100, 110 est piloté et mis en service par tous moyens appropriés détectant la présence d'un récipient dans la cavité. De préférence, mais non limitativement, l'ensemble détecteur de rayonnement ionisant est ainsi initié par un signal prélevé sur la chaîne de mesure d'impédance complexe et représentatif de la présence d'un tel récipient dans le canal 20.

On a décrit précédemment plusieurs modes de réalisation de moyens 40 formant émetteurs/récepteurs de champ électromagnétique. Dans le cadre de la présente invention, il est de préférence prévu des moyens permettant de modifier la configuration des moyens formant émetteurs et des moyens formant récepteurs, afin d'enrichir les informations disponibles, par exemple sur le volume du récipient analysé.

On a en particulier illustré sur la figure 4 une variante de réalisation selon laquelle les moyens 40 comprennent quatre armatures capacitive 45, 46, 47 et 48 disposées respectivement sur l'extérieur de chacune des quatre faces d'une section carrée du canal 20. Dans ce contexte, il est prévu des moyens de commutation au sein du réseau de mesure 56, pour modifier la configuration des moyens 40 de sorte que dans une première configuration l'une des deux armatures inférieures 46 ou 48 forme un émetteur tandis que l'autre armature inférieure 48 ou 46 forme un récepteur, et une seconde configuration dans laquelle les deux armatures inférieures 46 et 48 forment des émetteurs tandis que les deux armatures supérieures 45 et 47 forment des récepteurs, ou inversement.

## Revendications

1. Dispositif d'analyse de la composition du contenu d'un récipient comprenant :
- des moyens (40) émetteurs/récepteurs d'un champ électromagnétique à au moins plusieurs fréquences comprises dans une plage de fréquences déterminée,
- des moyens (22) support d'un récipient (R) dont le contenu doit être analysé, adaptés pour assurer un positionnement précis relatif entre les moyens émetteurs/récepteurs (40) et le récipient (R),
- des moyens (50) aptes à mesurer l'impédance complexe des moyens émetteurs/récepteurs influencée par la charge constituée par le récipient (R) et son contenu, représentative des caractéristiques diélectriques complexes du récipient et de son contenu, et
- des moyens (50) aptes à fournir une information liée à l'impédance complexe mesurée et en conséquence à la nature du contenu dudit récipient,
dans lequel les moyens émetteurs/récepteurs (40) comprennent quatre armatures capacitives (45, 46, 47 et 48) disposées respectivement sur l'extérieur de chacune des quatre faces d'une section carrée d'un canal (20) de réception de récipient dont les diagonales sont respectivement verticale et horizontale de sorte qu'une arête de cette section du canal coïncide avec le point le plus bas du canal, et qu'il est prévu des moyens de commutation pour modifier la configuration des moyens (40) de sorte que dans une première configuration l'une des deux armatures inférieures (46, 48) forme un émetteur tandis que l'autre armature inférieure (48 ou 46) forme un récepteur et une seconde configuration
dans laquelle les deux armatures inférieures (46 et 48) forment des émetteurs tandis que les deux armatures supérieures (45 et 47) forment des récepteurs, ou inversement.

2. Dispositif selon la revendication 1, **caractérisé par le fait que** les moyens (50) aptes à fournir une information comprennent des moyens aptes à comparer l'impédance complexe mesurée avec des valeurs de référence prédéterminées pour la même plage de fréquences et à générer une alarme lorsque l'impédance complexe mesurée s'écarte des valeurs de référence.

3. Dispositif selon l'une des revendications 1 ou 2, **caractérisé par le fait que** les moyens (50) aptes à fournir une information liée à l'impédance complexe mesurée comprennent des moyens (70) aptes à indiquer la nature ainsi détectée du contenu du récipient ou au moins la famille de ce contenu.

4. Dispositif selon l'une des revendications 1 à 3, **caractérisé par le fait que** les moyens (40) émetteurs/récepteurs d'un champ électromagnétique sont adaptés pour balayer la plage de fréquences allant de quelques Hz à quelques GHz.

5. Dispositif selon l'une des revendications 1 à 4, **caractérisé par le fait que** les moyens (50) aptes à mesurer l'impédance complexe sont adaptés pour mesurer celle-ci sur une pluralité de fréquences échantillonnées sur la plage couverte par les moyens émetteurs/récepteurs.

6. Dispositif selon l'une des revendications 1 à 5 prise en combinaison avec la revendication 2, **caractérisé par le fait que** les moyens aptes à comparer l'impédance complexe mesurée sont adaptés pour comparer celle-ci avec des valeurs de référence contenues dans une mémoire (60).

7. Dispositif selon l'une des revendications 1 à 6, **caractérisé par le fait qu'**il comprend un capteur (52) adapté pour détecter la mise en place d'un récipient (R) dans les moyens supports (22).

8. Dispositif selon l'une des revendications 1 à 6, **caractérisé par le fait qu'**il comprend des moyens à actionnement manuel adaptés pour initier la mise en service des moyens (40) émetteurs/récepteurs d'un champ électromagnétique.

9. Dispositif selon l'une des revendications 1 à 8, **caractérisé par le fait qu'**il est placé dans un carter (10) métallique.

10. Dispositif selon l'une des revendications 1 à 9, **caractérisé par le fait que** les moyens supports (20) définissent une concavité (22) dirigée vers le haut.

11. Dispositif selon l'une des revendications 1 à 10, **caractérisé par le fait que** les moyens supports (20) définissent une concavité (22) dirigée vers le haut obtenue grâce à deux tronçons rectilignes.

12. Dispositif selon l'une des revendications 1 à 11, **caractérisé par le fait que** les moyens supports comprennent une cavité (20) dont la section droite est globalement constante définie par des génératrices inclinées vers le bas en éloignement de la face avant ouverte du boîtier.

13. Dispositif selon l'une des revendications 1 à 12, **caractérisé par le fait qu'**il comprend en outre un ensemble (100, 110) détecteur de rayonnement ionisant ou radioactif.

14. Dispositif selon la revendication 13, **caractérisé par le fait que** l'ensemble détecteur de rayonnement ionisant (100, 110) est placé à proximité immédiate des moyens (20) support de récipient, sur l'extérieur de ceux-ci.

15. Dispositif selon l'une des revendications 13 ou 14, **caractérisé par le fait que** l'ensemble détecteur de rayonnement ionisant (100, 110) est adapté pour travailler en temps masqué, en parallèle du dispositif de mesure d'impédance complexe.

16. Dispositif selon l'une des revendications 13 à 15, **caractérisé par le fait que** l'ensemble détecteur de rayonnement ionisant (100, 110) est piloté et mis en service par un signal prélevé sur la chaîne de mesure d'impédance complexe et représentatif de la présence d'un récipient sur les moyens (20) support de récipient.

## Patentansprüche

1. Analysevorrichtung der Zusammensetzung des Inhaltes eines Behälters, umfassend:
- Sender- / Empfangsmittel (40) eines elektromagnetischen Feldes in wenigstens mehreren Frequenzen, die in einem Frequenzbereich inbegriffen sind,
- Trägermittel (22) eines Behälters (R), dessen Inhalt analysiert werden soll, welche geeignet sind, um eine relative präzise Positionierung zwischen den Sender- / Empfängermitteln (40) und dem Empfänger (R) zu gewährleisten,
- Mittel (50), die geeignet sind, um die komplexe Impedanz der Sender- / Empfängermittel zu messen, welche durch die Last beeinflusst ist, die durch den Behälter (R) und seinen Inhalt gebildet ist, die die dielektrischen komplexen Merkmale des Behälters und seines Inhaltes darstellt, und
- Mittel (50), die geeignet sind, um eine Information zu liefern, die mit der gemessenen komplexen Impedanz und infolgedessen mit der Art des Inhaltes des genannten Behälters verbunden ist,
bei dem die Sender- / Empfängermittel (40) vier kapazitive Armaturen (45, 46, 47 und 48) umfassen, die jeweils an der Außenseite jeder der vier Seiten eines quadratischen Querschnitts eines Empfangskanals (20) des Behälters angeordnet sind, dessen Diagonalen jeweils vertikal und horizontal derart sind, dass eine Kante dieses Abschnitts des Kanals mit dem tiefsten Punkt des Kanals zusammenfällt und dass Schaltmittel vorgesehen sind, um die Konfiguration der Mittel (40) derart zu verändern, dass in einer ersten Konfiguration eine der unteren Armaturen (46, 48) einen Sender bildet, während die andere untere Armatur (48 oder 46) einen Empfänger bildet und eine zweite Konfiguration, in der die zwei unteren Armaturen (46 und 48) Sender bilden, während die zwei oberen Armaturen (45 und 47) Empfänger bilden oder umgekehrt.

2. Vorrichtung gemäß Anspruch 1, **gekennzeichnet durch** die Tatsache, dass die Mittel (50), die geeignet sind, eine Information zu liefern, Mittel für den Vergleich der gemessenen komplexen Impedanz mit vorbestimmten Referenzwerten für denselben Frequenzbereich und zum Generieren eines Alarms umfassen, wenn die gemessene komplexe Impedanz von den Referenzwerten abweicht.

3. Vorrichtung gemäß Anspruch 1 oder 2, **gekennzeichnet durch** die Tatsache, dass die Mittel (50), die geeignet sind, eine mit der gemessenen komplexen Impedanz verbundene Information zu liefern, Mittel (70) umfassen, die geeignet sind, die auf diese Weise erfasste Art des Inhaltes des Behälters oder wenigstens die Familie dieses Inhaltes anzuzeigen.

4. Vorrichtung gemäß Anspruch 1 bis 3, **gekennzeichnet durch** die Tatsache, dass die Sender- / Empfängermittel (40) eines elektromagnetischen Feldes geeignet sind, um den Frequenzbereich abzutasten, der von einigen Hz bis zu einigen GHz reicht.

5. Vorrichtung gemäß Anspruch 1 bis 4, **gekennzeichnet durch** die Tatsache, dass die Mittel (50), die geeignet sind, die komplexe Impedanz zu messen, geeignet sind, um diese über eine Vielzahl von Frequenzen zu messen, die über den von den Sender- / Empfängermitteln abgedeckten Bereich beprobt sind.

6. Vorrichtung gemäß Anspruch 1 bis 5 in Verbindung mit Anspruch 2, **gekennzeichnet durch** die Tatsache, dass die Mittel, die für den Vergleich der gemessenen komplexen Impedanz geeignet sind, für den Vergleich derselben mit Referenzwerten geeignet sind, die in einem Speicher (60) enthalten sind.

7. Vorrichtung gemäß Anspruch 1 bis 6, **gekennzeichnet durch** die Tatsache, dass sie einen Sensor (52) umfasst, der geeignet ist, um das Einsetzen eines Behälters (R) in den Trägermitteln (22) zu erfassen.

8. Vorrichtung gemäß Anspruch 1 bis 6, **gekennzeichnet durch** die Tatsache, dass sie Mittel zur manuellen Betätigung umfasst, um die Inbetriebnahme der Sender- / Empfängermittel (40) eines elektromagnetischen Feldes zu initiieren.

9. Vorrichtung gemäß Anspruch 1 bis 8, **gekennzeichnet durch** die Tatsache, dass sie in ein Metallgehäuse (10) platziert ist.

10. Vorrichtung gemäß Anspruch 1 bis 9, **gekennzeichnet durch** die Tatsache, dass die Trägermittel (20) eine Hohlwölbung (22) definieren, die nach oben gerichtet ist.

11. Vorrichtung gemäß Anspruch 1 bis 10, **gekennzeichnet durch** die Tatsache, dass die Trägermittel (20) eine Hohlwölbung (22) definieren, die nach oben gerichtet ist und dank zweier geradliniger Abschnitte erhalten wird.

12. Vorrichtung gemäß Anspruch 1 bis 11, **gekennzeichnet durch** die Tatsache dass die Trägermittel eine Ausnehmung (20) umfassen, deren gerader Abschnitt insgesamt konstant und von nach unten geneigten Mantellinien per Entfernung der offenen vorderen Seite vom Kasten definiert ist.

13. Vorrichtung gemäß Anspruch 1 bis 12, **gekennzeichnet durch** die Tatsache, dass sie darüber hinaus eine Gruppe (100, 110) zur Erfassung ionisierender oder radioaktiver Strahlung umfasst.

14. Vorrichtung gemäß Anspruch 13, **gekennzeichnet durch** die Tatsache, dass die Gruppe zur Erfassung ionisierender Strahlung (100, 110) in der unmittelbaren Nähe der Trägermittel (20) des Behälters an der Außenseite desselben platziert ist.

15. Vorrichtung gemäß Anspruch 13 oder 14, **gekennzeichnet durch** die Tatsache, dass die Gruppe zur Erfassung ionisierender Strahlung (100, 110) geeignet ist, um in Überlappungszeit, parallel zu der Messvorrichtung der komplexen Impedanz zu arbeiten.

16. Vorrichtung gemäß Anspruch 13 bis 15, **gekennzeichnet durch** die Tatsache, dass die Gruppe zur Erfassung der ionisierenden Strahlung (100, 110) **durch** ein Signal gesteuert und in Betrieb genommen wird, das auf der Messkette der komplexen Impedanz entnommen wird und für das Vorhandensein eines Behälters auf den Trägermitteln (20) des Behälters repräsentativ ist.

## Claims

1. A device for analysing the composition of the content of a container comprising:
- means (40) for transmitting/receiving an electromagnetic field at least at several frequencies comprised in a determined frequency range,
- means (22) for supporting a container (R) the content of which is to be analysed, adapted to provide a relative accurate positioning between the transmitting/receiving means (40) and the container (R),
- means (50) able to measure the complex impedance of the transmitting/receiving means influenced by the load consisting in the container (R) and its content, representing complex dielectric characteristics of the container and of its content, and
- means (50) able to supply a piece of information related to the measured complex impedance and consequently to the nature of the content of said container,
wherein
the transmitting/receiving means (40) comprise four capacitive frames (45, 46, 47 and 48) respectively disposed on the exterior of each of the four faces of a square section of a channel (20) for receiving a container the diagonals of which are respectively vertical and horizontal so that an edge of this channel section coincides with the lowest point of the channel, and switching means are provided to modify the configuration of the means (40) so that in a first configuration, one of both lower frames (46, 48) forms a transmitter whereas the other lower frame (48 or 46) forms a receiver and a second configuration in which both lower frames (46 and 48) form transmitters whereas both upper frames (45 and 47) form receivers, or viceversa.

2. The device according to claim 1, **characterized in that** the means (50) able to supply a piece of information comprise means able to compare the measured complex impedance with predetermined reference values for the same frequency range and to generate an alarm when the measured complex impedance deviates from the reference values.

3. The device according to one of claims 1 and 2, **characterized in that** the means (50) able to supply a piece of information related to the measured complex impendence comprise means (70) able to indicate the thus detected nature of the content of the container or at least the family of this content.

4. The device according to one of claims 1 to 3, **characterized in that** the means (40) for transmitting/receiving an electromagnetic field are adapted to scan the frequency range ranging from a few Hz to a few GHz.

5. The device according to one of claims 1 to 4, **characterized in that** the means (50) able to measure the complex impedance are adapted to measure the latter on a plurality of frequencies sampled on the range covered by the transmitting/receiving means.

6. The device according to one of claims 1 to 5 taken in combination with claim 2, **characterized in that** the means able to compare the measured complex impedance are adapted to compare the latter with reference values contained in a memory (60).

7. The device according to one of claims 1 to 6, **characterized in that** it comprises a sensor (52) adapted to detect the placement of a container (R) in the supporting means (22).

8. The device according to one of claims 1 to 6, **characterized in that** it comprises hand operated means adapted to initiate the activation of the means (40) for transmitting/receiving an electromagnetic field.

9. The device according to one of claims 1 to 8, **characterized in that** it is placed in a metallic casing (10).

10. The device according to one of claims 1 to 9, **characterized in that** the supporting means (20) define a concavity (22) pointed upwards.

11. The device according to one of claims 1 to 10, **characterized in that** the supporting means (20) define a concavity (22) pointed upwards obtained thanks to two rectilinear segments.

12. The device according to one of claims 1 to 11, **characterized in that** the supporting means comprise a cavity (20) the cross-section of which is generally constant, defined by generators tilted downwards away from the open front face of the case.

13. The device according to one claims 1 to 12, **characterized in that** it further comprises a radioactive or ionizing radiation detector assembly (100, 110).

14. The device according to claim 13, **characterized in that** the ionizing radiation detector assembly (100, 110) is placed in close proximity to the means (20) for supporting a container, on the exterior thereof.

15. The device according to one of claims 13 and 14, **characterized in that** the ionizing radiation detector assembly (100, 110) is adapted to operate in concurrent time, at the same time as the device for measuring the complex impedance.

16. The device according to one of claims 13 to 15, **characterized in that** the ionizing radiation detector assembly (100, 110) is driven and activated by a signal sampled on the chain for measuring the complex impedance and representing the presence of a container on the means (20) for supporting a container.
